# EUROPEAN PATENT SPECIFICATION

(11) **EP 3 030 507 B1**
(45) Date of publication and mention of the grant of the patent: **10.10.2018**
(21) Application number: 14753197.4
(22) Date of filing: 07.08.2014
(51) Int. Cl.: B65G 47/52, B65G 47/96

(54) **OPERATING A SORTING SYSTEM FOR ITEMS HAVING VARIATING SIZE**
BETRIEB EINES SORTIERUNGSSYSTEMS FÜR ARTIKEL MIT VARIIERENDER GRÖSSE
ACTIONNEMENT D'UN SYSTÈME DE TRI POUR ARTICLES PRÉSENTANT DES TAILLES VARIABLES

(30) Priority: 08.08.2013 DK 201370435
(43) Date of publication of application: 15.06.2016
(73) Proprietor: BEUMER Group A/S, 8200 Aarhus N (DK)
(72) Inventor: LYKKEGAARD, Uffe, DK-8000 Aarhus C (DK); STAUN, Jørgen, DK-8382 Hinnerup (DK)
(74) Representative: Plougmann Vingtoft a/s
(86) International application number: PCT/DK2014/050237
(87) International publication number: WO 2015/018422

(56) References cited:
- WO-A1-00/32502
- WO-A1-2008/145559
- US-A1- 2003 221 935
- US-B1- 6 478 138

## Description

### TECHNICAL FIELD

The present invention relates to a method of operating a sorting system for receiving items at one or more loading locations and off-loading items at one or more off-loading locations, where the sorting system comprises a plurality of carts, said carts having at least one support area, which may be operated to load and off-load items, or where onboard or non-onboard means may be used to cause loading and off-loading of items, and where the loading and off-loading of items may be done both to starboard and port sides of a transport direction of the carts. More specifically, the present invention relates to a method of operating a sorting system, where items to be sorted are pre-arranged and pre-oriented upstream in a conveying path, and diverted and loaded onto the carts, while maintaining the pre-arrangement and pre-orientation.

### BACKGROUND

It is generally sought, when designing sorter systems, to keep a low complexity, to keep track of items to be sorted and to load the items onto the carts under controlled circumstances. This means e.g. that mis-oriented and/or mis-arranged items are to be avoided, as this may cause misplacement of the items on the carts, which again may mean lost items, items which cannot be off-loaded precisely etc. Moreover, it is also sought to use the carts support areas, i.e. the areas which may carry one or more items, to a highest possible degree, which e.g comprises to be able to carry more than one small item on a single cart and oversize items on at least two consecutive carts.

Different options have been suggested to handle this.

EP 0 963 929 discloses a way of re-arranging the sequence of items, in order to place the items on a cross-belt sorter, so that starboard side and portside items are correctly loaded and located on the cart for off-loading. Also items size-wise suited for a single cart may be loaded. A, in a horizontal plane, turnable conveyor 8 is used for this. However, the conveyor takes up space and when two items are turned for switching place in the sequence, all transport belts need to stop during the turning, which is time consuming and may lead to empty carts passing the loading station.
EP 0 700 844 discloses how items, which are too large to fit a cart, may be loaded onto two consecutive carts. However, a complex control system is required for operating the belts on the carts in relation to the sorter speed in order to precisely orient the item on the carts.

US 6,478,138 B1 discloses a method according to the preamble of claim 1. Hence, an improved sorter system would be advantageous, and in particular a more efficient and/or reliable method of operating the sorter system would be advantageous.
It is one object of the present invention to provide an improvement to the earlier presented art. Other objectives may be derived from the specification and figures.

### SUMMARY

The present invention comprises a method of operating a sorting system for receiving items at one or more loading locations and off-loading items at one or more off-loading locations, according to appended claim 1.

In order to avoid the aforementioned issues with the already known earlier art, the present invention suggests in short to pre-arrange and pre-orient the items upstream to the loading of the items onto the support areas of the carts. This removes time consuming operations at zones of loading the items and may be done manually or by a combination of scanning, turning and moving equipment in order to prepare the items for downstream being loaded onto the support areas in a controlled and predetermined sequence. When the items are pre-arranged and pre-oriented upstream, the diverter may maintain this configuration of the items, when diverting the items to an induction conveyor, where the induction conveyor keeps maintaining said configuration until the items are received by the support areas. In this way, the items are loaded precisely in a controlled, predetermined order, whereby the items may be safely transported by the carts to one or more off-loading positions, where they may be precisely off-loaded in a controlled manner. Also, the method is suited for handling both small, medium and large size items with one sorting system.
The items to be sorted may be pre-arranged as well as pre-oriented, in a way such that the items are arranged to fit to a support area, which comprise that before the items are transferred to the diverter, that one or more small items are arranged and being oriented in such a manner, that a total length and width in a horizontal plane of said one or more small items fit to a length and width of a support area. This enables a high degree of utilizing the space of the supporting areas.

According to the invention, the pre-arranging of one or more small items to be sorted as well as pre-orienting the items, in a way such that the one or more small items are arranged to fit a support area, comprises that before the items are transferred to the diverter, that the small items are oriented in such a manner, that said small items also are co-aligned with an orientation and arrangement, that fit to a longitudinal centerline of the support area, which is predetermined to receive said small items. The co-alignment of the small items with the longitudinal centerline of the support area ensures a well suited placement of the items on the support area, both for loading, transport and off-loading.
A longitudinal centerline of a support area may be transverse or parallel to a moving direction of said support area. Whether the longitudinal centerline is transverse or parallel to the moving direction depends on the design of the support area, which again may be dependent on the type and size of the items to be sorted by the sorting system.
The pre-arranging of medium and large items as well as pre-orienting the items, in a way such that the items are arranged to fit to at least one support area, comprise that before the items are transferred to the diverter, that medium and large items are arranged and oriented in such a manner, that a total length and width in a horizontal plane of medium and large items fit to a length and width of at least one support area. This enables a high degree of utilizing the space of the supporting areas.

The prearranging of medium and large items to be sorted as well as pre-orienting the items, in a way such that the medium and large items are arranged to fit to at least one support area, may comprise that before the items are transferred to the diverter, that said medium and large items oriented in such a manner, that said medium and large items are each also co-aligned with an orientation, that provides most distance from all sides of the at least one support area, which is predetermined to receive said medium and large items. The co-alignment of the medium and large items, such as to fit in order to provide most distance from all sides of the at least one support area, ensures a well suited placement of the items on the support area, both for loading, transport and off-loading by providing a centering of the items in relation to the support area or areas.

The at least one induction conveyor is located adjacent to the diverter, where the induction conveyor receives pre-arranged and pre-oriented items, and conveys the items to the carts at an angle sideways and onto the carts corresponding to a sideways angle as received from the diverter. This ensures that the items stay pre-arranged and pre-oriented from the diverter to the induction conveyor and onto the carts. Also, this ensures a well suited placement of the items on the support area, both for loading, transport and off-loading.

The conveying of the items with the induction conveyor is at a predetermined acceleration and speed and at an angle sideways and onto the carts, where the predetermined acceleration and speed of the induction conveyor is adapted to the speed of the carts, in order that the conveyed items are to be received by predetermined support areas. This ensures, that the pre-arrangement and the pre-orientation of the items maintained on the induction conveyor, also are maintained, when the items are received by the support areas. A non-adapted acceleration and speed of the induction conveyor would result in a slip or slide between the items and the support areas and thereby an imprecise loading of the items, which as aforementioned may result in lost items and imprecise off-loading.

The diverted items, that are diverted at an angle sideways to reach the support areas, where said angle sideways is different from and less than orthogonal relative to a transport direction of support areas, which are to receive one or more predetermined approaching items from the diverter. The angle sideways provides a transport direction vector component of the items parallel to the transport direction of the support areas, which eases the loading and receipt of the items on the support areas, as the time frame for the loading and receipt increases as the angle decreases. Hence, an acute angle sideways will be preferred.

The pre-arranging of items to be sorted as well as pre-orienting the items, in a way such that the items are arranged to fit one or more support areas, may include that a distance between the items is adapted, such that one or more predetermined support areas may receive one or more predetermined items. The distance between the items may vary on a downstream conveying route towards the carts due to varying conveying speed, but the distance should be adapted, when the items are received by the induction conveyor, such that small, medium and large item may be loaded onto predetermined support areas in a synchronized manner. A distance between the items may also be desired, when two items are loaded onto one or more support areas, and are to be off-loaded to different sides in relation to the moving direction of the support areas.

While pre-arranged and pre-oriented items are being conveyed towards and onto the support areas, this may be performed such that transitions from one conveyor to another, or to support areas, are done at substantially same vertical level. Any such transitions or shifts in the vertical conveying level, whether it is upward jumps or downward falls may result in loss of the pre-arrangement and pre-orientation of the items, which will cause imprecise loading and off-loading of the items. However, during conveying, except from the transitions, the conveying may change the vertical level of the items.

### BRIEF DESCRIPTION OF THE FIGURES

The method according to the invention will now be described in more detail with regard to the accompanying figures. The figures show one way of implementing the present invention and is not to be construed as being limiting to other possible embodiments falling within the scope of the claims.

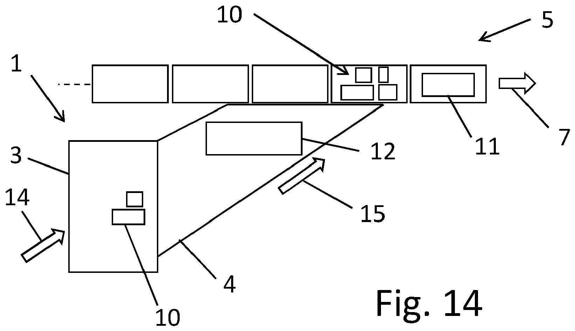

The figures 1 - 6, and 14, are schematic top views of various conveying and loading situations. Figures 7 to 13 are schematic views of details of components of the sorting system.

Figures 1-6 show a sorting system, where the support areas are shorter in a transport direction of the support areas, than a width in the transverse direction. Figure 14 shows a sorting system, where the support areas are longer in a transport direction of the support areas, than a width in the transverse direction.
- Figures 1a - 1f show a sequence of situations from receiving two small items until the loading of the items onto a support area,
- Figures 2a - 2d show a sequence of situations from receiving medium item until the loading of the item onto a support area,
- Figure 3 shows a number of twin sets of large items being diverted and loaded onto two support areas,
- Figure 4 shows loading of a large item onto two support areas,
- Figure 5 shows loading of a large item onto three support areas,
- Figure 6 shows loading of a sequence of items having varying size,
- Figure 7a shows two large items oriented in such a manner, that they are also co-aligned with an orientation, that fit to provide most distance from all sides of the at least one support area.
- Figure 7b shows co-alignment of a medium item on a longitudinal centerline of surface area.
- Figure 8a and 8b show a front view of a tilt tray-type cart,
- Figure 9 shows a front view of a cross-belt-type cart,
- Figure 10 shows a front view of a roller-type cart,
- Figure 11 shows a front view of a fixed tray-type cart,
- Figure 12 shows a front view of a spherical ball-type cart,
- Figure 13a shows a top view of a diverter with two sets of wheels, where each wheel set have different directions,
- Figure 13b shows a top view of a diverter with driven spherical balls, where the balls are adapted to convey items in at least two directions.
- Figure 14 shows loading of a sequence of items having varying size, where the support areas are longer in a transport direction of the support areas, than a width in the transverse direction.

### DETAILED DESCRIPTION

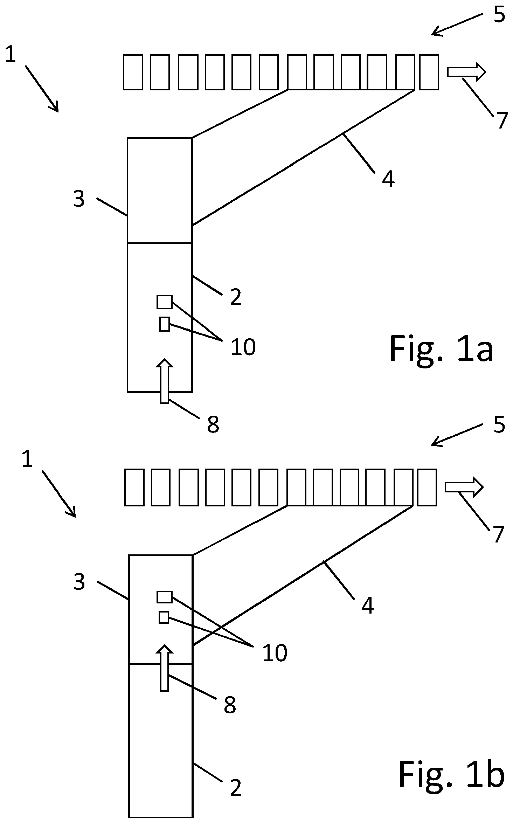

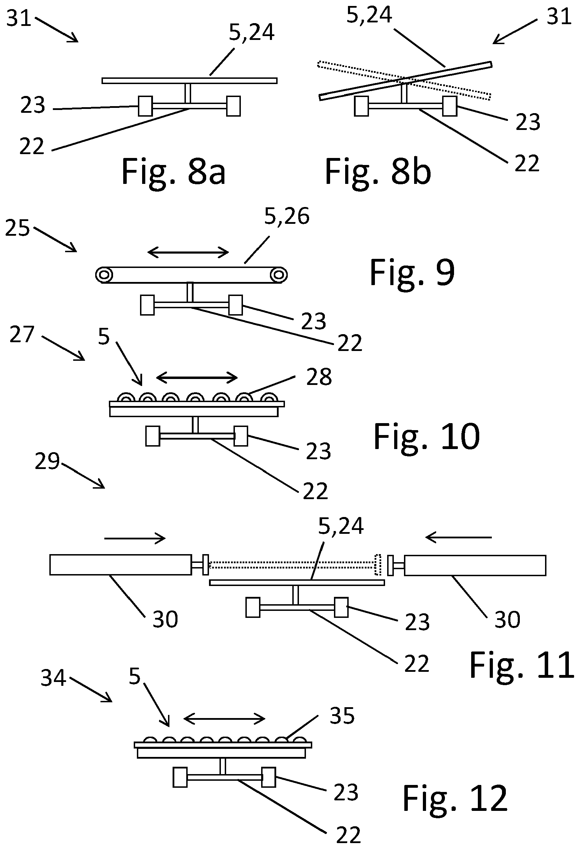

Figs. 1a - If show a sorter system 1 comprising a conveying system 2. The conveying system 2 is shown with only one conveyor, but may include any number of conveyors of any type suitable for conveying small items 10, medium items 11 and large items 12 downstream to a diverter 3. The sorting system 1 is adapted for receiving items at one or more loading locations and off-loading items at one or more off-loading locations (not shown). The sorting system comprises a plurality of carts, which are not shown in figs. 1a - If. Carts may be seen on figs. 8-12. Instead is shown a number of support areas 5, which may belong to any number of carts. Hence, a cart may comprise one or more support areas 5. The transport direction of the support areas is indicated by the arrow 7. Adjacent to the diverter 3 is located an induction conveyor 4, which loads the items onto the support areas 5. The not shown carts are usually coupled together to form a train-like configuration, which may form an endless loop.

In fig. 1a is shown how two small items 10, which have been pre-arranged as well as pre-oriented, in a way such that the items 10 are arranged and oriented to fit a support area 5. The pre-arrangement and the pre-orientation have been performed e.g. manually or by suitable mechanical equipment before being received by the diverter 3. A direction of movement of the items 10 is indicated by the arrow 8.

In fig. 1b it is shown how the items 10 are conveyed to the diverter 3, without changing the pre-arrangement and pre-orientation. At the diverter 3 the items 10 may have a short stop.

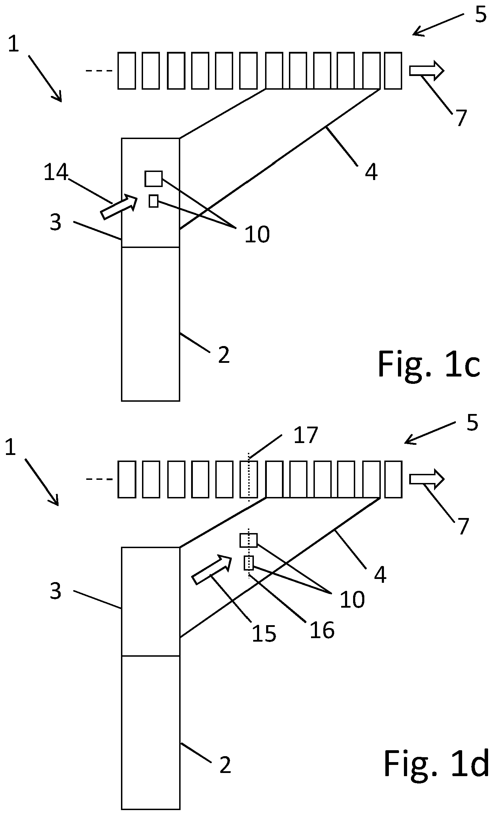

In fig. 1c it is shown how the items 10 now are diverted under an angle indicated by the arrow 14, while maintaining the pre-arrangement and pre-orientation of the items.

In fig. 1d it is shown how the items 10 are forwarded by the induction conveyor 4 under an angle sideways and towards the support areas 5. The angle is indicated by the arrow 15. Also shown, as an option, is that the two items 10 are pre-arranged and pre-oriented as well as co-aligned, indicated by a dotted line 16, in order to fit to a longitudinal centerline of a support area 5, as indicated by the dotted line 17.

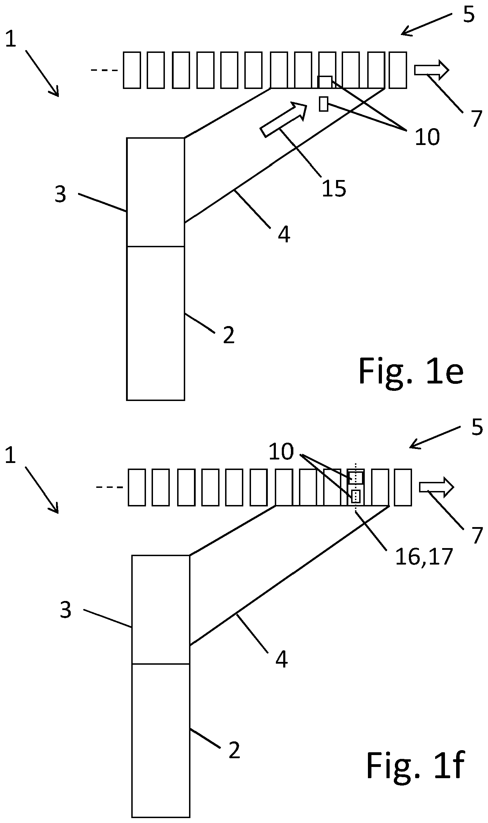

In figs. 1e and 1f it is shown how the items 10 keep progressing towards and onto support areas 5, until they are fully received. And as shown in fig. If, that co-aligned items 10 have a centerline 16, which fits with a longitudinal centerline 17 of a support area 5, as indicated by the coinciding dotted lines 16 and 17. This is preferred, but a mere pre-arrangement and pre-orientation suited for making the items fit to a support area may do.

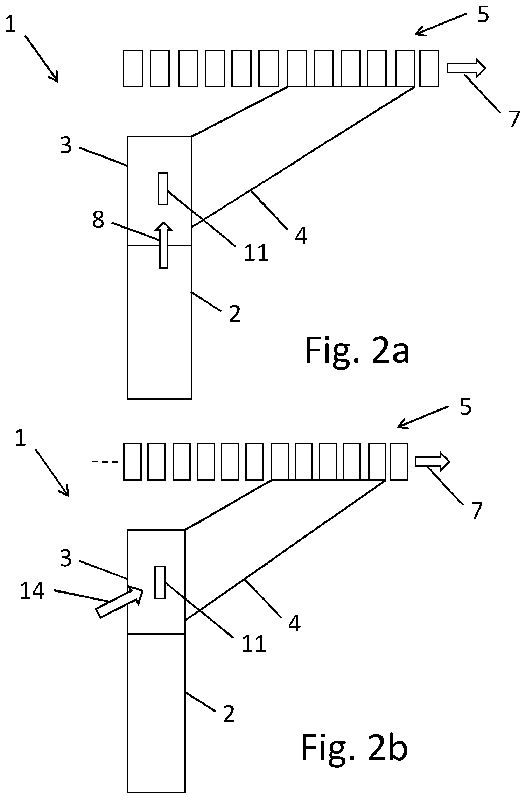

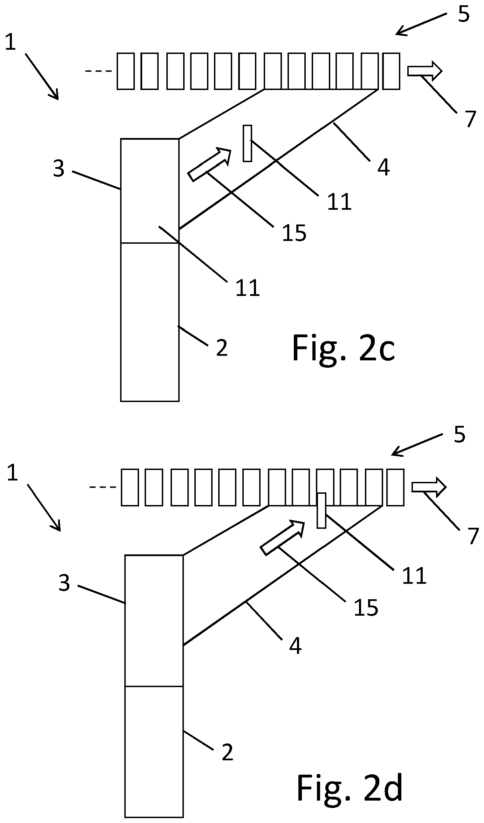

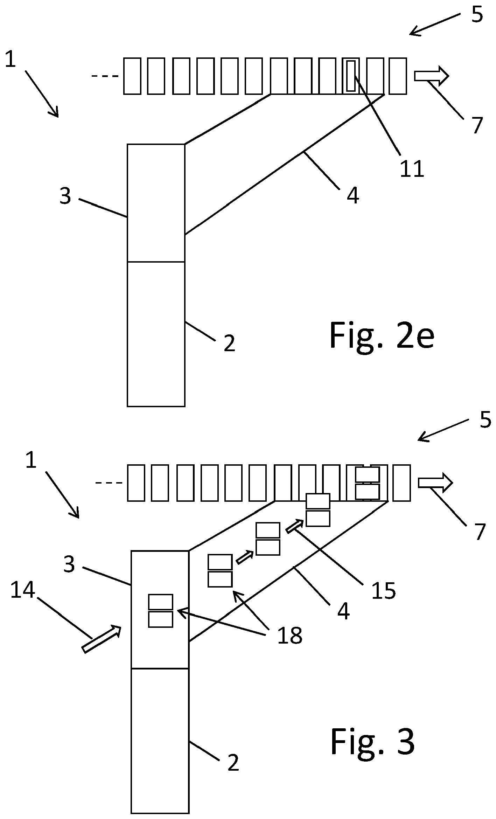

Figs. 2a- 2e show a sorter system 1 comprising a conveying system 2. The conveying system 2 is shown with only one conveyor but may include any number of conveyors of any type suitable for conveying items downstream to a diverter 3. The sorting system 1 is adapted for receiving items at one or more loading locations and off-loading items at one or more off-loading locations (not shown). The sorting system comprises a plurality of carts, which are not shown in figs. 2a - 2e. Carts may be seen on figs. 8-12. Instead is shown a number of support areas 5, which may belong to a number of carts. The transport direction of the support areas is indicated by the arrow 7. Adjacent to the diverter 3 is located an induction conveyor 4, which loads the items onto the support areas 5. Figs. 2a-2e show in principle a similar course of loading items onto a support area 5 as figs. 1a-1f. The only difference is that here it is medium items 11.

Fig. 3 shows a sorter system 1 comprising a conveying system 2. The conveying system 2 conveys items downstream to a diverter 3. The sorting system 1 is adapted for receiving items at one or more loading locations and off-loading items at one or more off-loading locations (not shown). The sorting system comprises a plurality of carts, which are not shown in fig. 3. The transport direction of the support areas is indicated by the arrow 7. Adjacent to the diverter 3 is located an induction conveyor 4, which loads the items onto the support areas 5. Fig. 3 shows in principle a similar course of loading items 18 onto a support area 5 as figs. 1a-1f and 2a-2e. However, in fig. 3 the items 18 are twin sets of medium items, but the same principle would apply to longer large items, being loaded onto two or more support areas 5.

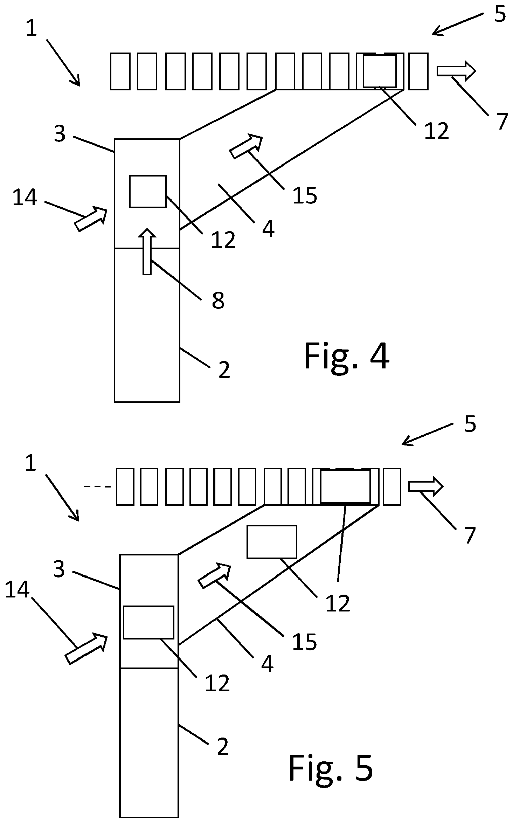

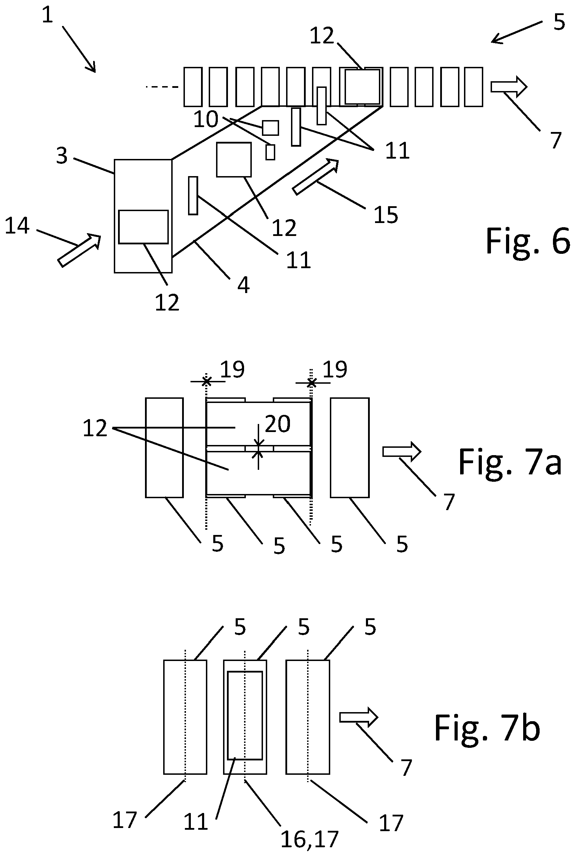

Fig. 4 shows a sorter system 1 similar to those of figs. 1a-1f, 2a-2e and 3. In this case the loaded items 12 are large items, which have a size that requires minimum two consecutive support areas for being loaded onto. The same applies to fig. 5, where large items 12 are loaded onto three support areas 5. Fig. 6 shows how the sorting may take place during operation of the sorter system 1, where items 10, 11, 12 of varying size are continuously loaded onto support areas 5.

It is to be noted that in all of figs. 1a-1f, 2a-2e and 3-6, that the pre-arrangement of the items as well as the pre-orientation of the items from being received at the diverter 3 and until being loaded onto one or more support areas are maintained throughout.

Fig. 7a shows four support areas 5, where two items 12 are loaded onto two support areas 5. A transport direction is indicated by the arrow 7. To ensure safe loading, conveying and off-loading the items are placed with an equal distance 19 to back and forward ends in the transport direction of the support areas 5, and preferably to all sides of the transport areas. Also, a distance 20 between the items 12 is present in order to separate the items 12 for being off-loaded, or discharged, at off-loading location on a starboard and a port side, respectively. In case both items 12 are off-loaded to a same side, a distance 20 may not be necessary.

Fig. 7b shows three support areas 5, where each has a longitudinal centerline 17. And where a medium item 11 has also a longitudinal centerline 16, such that the item 11 is placed as centered as possible, again to ensure safe loading, conveying and off-loading the items. A transport direction is indicated by the arrow 7.

Figs. 8a and 8b show a tilt tray-type cart 21 having a tray 24 with a support area 5, frame 22 and wheels 23 adapted to fit to a not shown track. Fig. 8b shows the tilting of the tray 24 and support area 5. With dotted lines is shown a tilt to an opposite side.

Fig. 9 shows a cross-belt-type cart 25 having a cross-belt 26 with a support area 5, frame 22 and wheels 23 adapted to fit to a not shown track. As the arrow shows, the belt may be run to the right hand side as well as a left hand side. This is used when loading and off-loading items from the support area 5.

Fig. 10 shows a driven roller type cart 27 having driven rollers 28 with a support area 5, frame 22 and wheels 23 adapted to fit to a not shown track. As the arrow shows, the rollers may be run to the right hand side as well as a left hand side. This is used when loading and off-loading items from the support area 5.

Fig. 11 shows a fixed tray type cart having a tray 24 with a support area 5, frame 22 and wheels 23 adapted to fit to a not shown track. To off-load items from the support area, external means are used. Here, it is indicated that pneumatic cylinders 30 are used. However, any suitable kind of external pusher, drawer or guiding means may be used. The dotted lines indicate the left hand cylinder in its fully extended situation. An onboard device, not shown, may also be used, such as a pusher, drawer or any other actuator.

Fig. 12 shows a driven spherical ball type cart 34 having driven balls 35 with a support area 5, frame 22 and wheels 23 adapted to fit to a not shown track. As the arrow shows, the balls may be driven to the right hand side as well as a left hand side. This is used when loading and off-loading items from the support area 5.

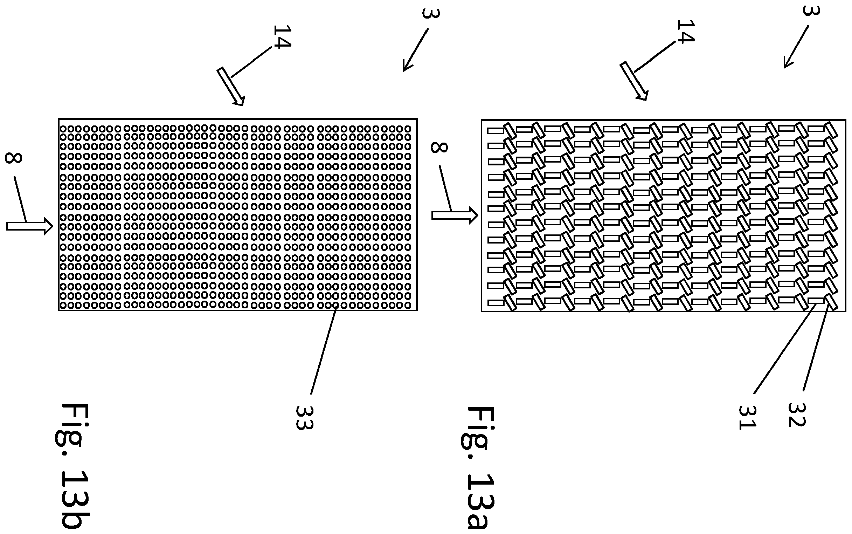

Figs. 13a and 13b show variants of a diverter 3. In fig. 13a a plurality of wheels 31 are adapted to receive items from a not shown conveyor. The items are received in the direction indicated by the arrow 8. Another plurality of wheels 32 may be raised slightly, or the wheels 31 lowered slightly, when an item may be stopped in order to be diverted using the wheels 32 and diverting the item at an angle indicated by the arrow 14. In fig. 13b the diverter is fitted with driven spherical balls 33 instead of wheels 31, 32. Items may be received from a conveyor at an angle indicated by the arrow 8 and diverted at an angle indicated by the arrow 14. Both variants 13a and 13b may be controlled to divert one or more items received from a conveyor and onto an induction conveyor nonstop for enhanced capacity.

Not shown in the figs., the following may apply to the induction conveyor 4. The induction conveyor 4 may comprise driven cylindrical rollers for supporting and conveying the items to the support areas. In another variant a plurality of parallel driven belts or straps may be used for supporting and conveying the items to the support areas.
Although the present invention has been described in connection with the specified variants, it should not be construed as being in any way limited to the presented examples. The scope of the present invention is set out by the accompanying claim set.

## Claims

1. A method of operating a sorting system (1) for receiving items at one or more loading locations and off-loading items at one or more off-loading locations, where the sorting system (1) comprises a plurality of carts, said carts having at least one support area (5), which may be operated to load and off-load items, or where onboard or non-onboard means may be used to cause loading and off-loading of items, and where the loading and off-loading of items may be done both to starboard and port sides of a transport direction (7) of the carts, the method comprising
- pre-arranging items to be sorted as well as pre-orienting the items, in a way such that the items are arranged and oriented to fit one or more support areas (5),
- forwarding the pre-arranged and pre-oriented items downstream toward the carts of the sorting system,
- before loading the items onto the carts, receiving the pre-arranged and pre-oriented items at a diverter (3) according to size:
- two or more items (10) being smaller than a support area (5), and fitting to at least part of the size of one support area (5), and
- medium items (11) having a size, where only one item may be arranged to fit to the size of one support area (5), and
- one or more large items (12) having a size, where one item is larger than the size of a single support area (5), and being adapted to fit at least two consecutive support areas (5),
the method being **characterised in that** it comprises:
- after receiving the pre-arranged and pre-oriented items at the diverter (3), diverting the items at an angle sideways to an induction conveyor (4), while maintaining the pre-arrangement and the pre-orientation of the items as received by the diverter (3),
- and further while maintaining the pre-arrangement and the pre-orientation of the items, loading the items with the induction conveyor (4) onto the one or more cart support areas (5), which are to receive and be loaded with one or more predetermined approaching items, and dependent on item size,
a. inducting two or more small pre-arranged and pre-oriented items (10) until said two or more small items (10) are received by one cart support area (5), and
b. inducting a pre-arranged and pre-oriented medium (11) item until said medium item is received by one cart support area (5), and
c. inducting one or more large pre-arranged and pre-oriented items (12) until said large items (12) are received by at least two consecutive cart support areas (5),
- wherein pre-arranging two or more small items (10) to be sorted as well as pre-orienting the items, in a way such that the two or more small items (10) are arranged to fit one support area (5), comprise that before the items are transferred to the diverter (3), that the small items (10) are oriented in such a manner, that said small items (10) also are co-aligned with an arrangement and orientation, that fit to a longitudinal centerline (17) of the support area (5), which is predetermined to receive said small items (10).

2. A method according to claim 1, wherein pre-arranging items to be sorted as well as pre-orienting the items, in a way such that the items are arranged to fit to one or more support areas (5), comprise that before the items are transferred to the diverter (3), that two or more small items (10) are arranged and oriented in such a manner, that a total length and width in a horizontal plane of said two or more small items (10) fit to a length and width of one support area (5).

3. A method according to claim 1, wherein pre-arranging medium (11) and large (12) items as well as pre-orienting the items, in a way such that the items are arranged to fit to at least one support area (5), comprise that before the items are transferred to the diverter (3), that medium (11) and large items (12) are arranged and oriented in such a manner, that a total length and width in a horizontal plane of medium (11) and large (12) items fit to a length and width of at least one support area (5).

4. A method according to claim 1 or 3, wherein prearranging medium (11) and large (12) items to be sorted as well as pre-orienting the items, in a way such that the medium and large items are arranged to fit to at least one support area (5), comprise that before the items are transferred to the diverter (3), that said medium (11) and large (12) items are oriented in such a manner, that said medium and large items are also co-aligned with an orientation, that provides most distance from all sides of the at least one support area (5), which is predetermined to receive said medium and large items.

5. A method according to any preceding claim, wherein at least one induction conveyor (4) is located adjacent to the diverter (3), where the induction conveyor receives pre-arranged and pre-oriented items, and conveys the items to the support areas (5) at an angle sideways and onto the support areas (5) corresponding to a an angle sideways as received from the diverter (3).

6. A method according to any of claims 1 to 5, wherein the conveying of the items with the induction conveyor (4) is at a predetermined acceleration and speed and at an angle sideways and onto the support areas (5), where the predetermined acceleration and speed of the induction conveyor is adapted to the speed of the support areas (5), in order that the conveyed items are to be received by predetermined support areas.

7. A method according to any preceding claim, wherein the diverted items, which are diverted at an angle sideways to reach the support areas (5), that said angle sideways is different from and less than orthogonal relative to a transport direction (7) of support carts, which are to receive one or more predetermined approaching items from the diverter (3).

8. A method according to any preceding claim, wherein pre-arranging items to be sorted as well as pre-orienting the items, in a way such that the items are arranged to fit one or more support areas (5), include that a distance between the items are adapted, such that one or more predetermined support areas (5) may receive one or more predetermined items.

9. A method according to any preceding claim, wherein the pre-arranged and pre-oriented items, while being conveyed towards and onto the support areas (5), that transition from one conveyor to another, or to a support area (5), are performed at substantially same vertical level.

10. A method according to any preceding claim, wherein a majority of the carts of the sorting system is of a cross-belt type cart.

11. A method according to claim 10, wherein the cross-belt type cart comprise at least two cross-belts.

12. A method according to any of claims 1-9, wherein a majority of the carts are of a cylindrical roller type and which is adapted to move items in one or more predetermined directions for loading and off-loading items.

13. A method according any of claims 1-9, wherein a majority of the carts of the sorting system is of a tilt-tray type cart (21).

14. A method according to claim 13, wherein a majority of the carts of the sorting system is of a tilt-tray type cart (21), where at least one item is arranged on a tote, which tote is to be arranged on the tilt-tray.

15. A method according to any of claims 1-9, wherein a majority of the carts are of a driven spherical ball type (34) and which is adapted to move items for loading and off-loading items.

16. A method according any of claims 1-9, wherein a majority of the carts of the sorting system is of a type, where the support area (5) is a fixed surface, and where items are offloaded with onboard or non-onboard means selected from a group comprising mechanical pushers and drawers, pneumatic pushers and drawers (30), electrical pushers and drawers, any kind of actuator, as well as on-off operable guiding means.

## Patentansprüche

1. Verfahren zum Betreiben eines Sortierungssystems (1) zum Empfangen von Artikeln an einer oder mehreren Ladepositionen und Entladen von Artikeln an einer oder mehreren Entladepositionen, wobei das Sortierungssystem (1) eine Vielzahl von Wagen umfasst, wobei die Wagen zumindest einen Auflagebereich (5) aufweisen, der dazu betrieben werden kann, Artikel zu laden und zu entladen, oder wobei integrierte oder nicht integrierte Mittel dazu verwendet werden können, Laden und Entladen von Artikeln zu veranlassen, und wobei das Laden und Entladen von Artikeln sowohl auf der Steuerbord- als auch auf der Backbordseite einer Transportrichtung (7) der Wagen erfolgen kann, wobei das Verfahren Folgendes umfasst:
- vorheriges Anordnen, sowie vorheriges Ausrichten der Artikel auf eine solche Weise, dass die Artikel so angeordnet und ausgerichtet sind, dass sie für einen oder mehrere Auflagebereiche (5) passen,
- Weiterleiten der vorher angeordneten und vorher ausgerichteten Artikel stromabwärts in Richtung der Wagen des Sortierungssystems,
- vor dem Laden der Artikel auf die Wagen, Empfangen der vorher angeordneten und vorher ausgerichteten Artikel an einer Umlenkvorrichtung (3) gemäß der Größe:
- zwei oder mehr Artikel (10), die kleiner als ein Auflagebereich (5) sind, und passend für zumindest einen Teil der Größe von einem Auflagebereich (5), und
- mittelgroße Artikel (11) mit einer Größe, bei der nur ein Artikel angeordnet werden kann, um für die Größe von einem Auflagebereich (5) zu passen, und
- ein oder mehrere große Artikel (12) mit einer Größe, bei der ein Artikel größer als die Größe eines einzelnen Auflagebereichs (5) ist, und dazu angepasst, für zumindest zwei aufeinander folgende Auflagebereiche (5) zu passen,
wobei das Verfahren **dadurch gekennzeichnet ist, dass** es Folgendes umfasst:
- nach dem Empfangen der vorher angeordneten und vorher ausgerichteten Artikel an der Umlenkvorrichtung (3), Umlenken der Artikel in einem Winkel in Seitwärtsrichtung zu einem Zuführförderer (4), während die vorherige Anordnung und vorherige Ausrichtung der Artikel, so wie durch die Umlenkvorrichtung (3) empfangen, aufrecht erhalten bleiben,
- und ferner, während die vorherige Anordnung und vorherige Ausrichtung der Artikel aufrecht erhalten bleiben, Laden der Artikel mit dem Zuführförderer (4) auf den einen oder die mehreren Wagenauflagebereiche (5), die einen oder mehrere vorbestimmte ankommende Artikel empfangen und damit beladen werden, und abhängig von der Artikelgröße,
a. Zuführen von zwei oder mehr kleinen vorher angeordneten und vorher ausgerichteten Artikeln (10), bis die zwei oder mehr kleinen Artikel (10) durch einen Wagenauflagebereich (5) empfangen werden, und
b. Zuführen eines vorher angeordneten und vorher ausgerichteten mittelgroßen (11) Artikels, bis der mittelgroße Artikel durch einen Wagenauflagebereich (5) empfangen wird, und
c. Zuführen von einem oder mehreren großen vorher angeordneten und vorher ausgerichteten Artikeln (12), bis die großen Artikel (12) durch zumindest zwei aufeinander folgende Wagenauflagebereiche (5) empfangen werden,
- wobei vorheriges Anordnen von zwei oder mehr kleinen Artikel (10), die zu sortieren sind, sowie vorheriges Ausrichten der Artikel auf eine Weise, dass die zwei oder mehr kleinen Artikel (10) so angeordnet sind, dass sie für einen Auflagebereich (5) passen, umfassen, dass, bevor die Artikel an die Umlenkvorrichtung (3) übertragen werden, die kleinen Artikel (10) auf eine solche Weise ausgerichtet werden, dass die kleinen Artikel (10) mit einer Anordnung und Ausrichtung zusammen ausgefluchtet sind, die für eine längs gerichtete Mittellinie (17) des Auflagebereichs (5) passt, der dazu vorbestimmt ist, die kleinen Artikel (10) zu empfangen.

2. Verfahren nach Anspruch 1, wobei das vorherige Anordnen von Artikeln, die zu sortieren sind, sowie das vorherige Ausrichten der Artikel auf eine Weise, dass die Artikel so angeordnet sind, dass sie für einen oder mehrere Auflagebereiche (5) passen, umfassen, dass, bevor die Artikel an die Umlenkvorrichtung (3) übertragen werden, die zwei oder mehr kleinen Artikel (10) auf eine solche Weise angeordnet und ausgerichtet werden, dass eine Gesamtlänge und -breite in einer horizontalen Ebene der zwei oder mehr kleinen Artikel (10) für eine Länge und Breite von einem Auflagebereich (5) passen.

3. Verfahren nach Anspruch 1, wobei das vorherige Anordnen von mittelgroßen (11) und großen (12) Artikeln, sowie das vorherige Ausrichten der Artikel auf eine Weise, dass die Artikel so angeordnet sind, dass sie für zumindest einen Auflagebereich (5) passen, umfassen, dass, bevor die Artikel an die Umlenkvorrichtung (3) übertragen werden, mittelgroße (11) und große Artikel (12) auf eine solche Weise angeordnet und ausgerichtet werden, dass eine Gesamtlänge und -breite in einer horizontalen Ebene von mittelgroßen (11) und großen (12) Artikeln für eine Länge und Breite von zumindest einem Auflagebereich (5) passen.

4. Verfahren nach Anspruch 1 oder 3, wobei das vorherige Anordnen von mittelgroßen (11) und großen (12) Artikeln, die zu sortieren sind, sowie das vorherige Ausrichten der Artikel auf eine Weise, dass die mittelgroßen und großen Artikel so angeordnet sind, dass sie für zumindest einen Auflagebereich (5) passen, umfassen, dass, bevor die Artikel an die Umlenkvorrichtung (3) übertragen werden, die mittelgroßen (11) und großen (12) Artikel auf eine solche Weise ausgerichtet werden, dass die mittelgroßen und großen Artikel auch mit einer Anordnung zusammen ausgefluchtet sind, die den größten Abstand von allen Seiten des zumindest einen Auflagebereichs (5) bereitstellt, der dazu vorbestimmt ist, die mittelgroßen und großen Artikel zu empfangen.

5. Verfahren nach einem der vorhergehenden Ansprüche, wobei sich zumindest ein Zuführförderer (4) neben der Umlenkvorrichtung (3) befindet, wobei der Zuführförderer vorher angeordnete und vorher ausgerichtete Artikel empfängt und die Artikel zu den Auflagebereichen (5) in einem Winkel in Seitwärtsrichtung und auf die Auflagebereiche (5) entsprechend einem Winkel in Seitwärtsrichtung, so wie von der Umlenkvorrichtung (3) empfangen, befördert.

6. Verfahren nach einem der Ansprüche 1 bis 5, wobei das Befördern der Artikel mit dem Zuführförderer (4) bei einer vorbestimmten Beschleunigung und Geschwindigkeit und mit einem Winkel in Seitwärtsrichtung und auf die Auflagebereiche (5) erfolgt, wobei die vorbestimmte Beschleunigung und Geschwindigkeit des Zuführförderer an die Geschwindigkeit der Auflagebereiche (5) angepasst werden, damit die beförderten Artikel durch vorbestimmte Auflagebereiche empfangen werden.

7. Verfahren nach einem der vorhergehenden Ansprüche, wobei bei den umgelenkten Artikeln, die in einem Winkel in Seitwärtsrichtung umgelenkt werden, um die Auflagebereiche (5) zu erreichen, der Winkel in Seitwärtsrichtung anders und kleiner als orthogonal in Bezug auf eine Transportrichtung (7) von Auflagewagen ist, die einen oder mehrere vorbestimmte, ankommende Artikel von der Umlenkvorrichtung (3) aufnehmen.

8. Verfahren nach einem der vorhergehenden Ansprüche, wobei das vorherige Anordnen von Artikeln, die zu sortieren sind, sowie das vorherige Ausrichten der Artikel auf eine Weise, dass die Artikel so angeordnet sind, dass sie für einen oder mehrere Auflagebereiche (5) passen, beinhalten, dass ein Abstand zwischen den Artikeln so angepasst ist, dass ein oder mehrere vorbestimmte Auflagebereiche (5) einen oder mehrere vorbestimmte Artikel empfangen können.

9. Verfahren nach einem der vorhergehenden Ansprüche, wobei für die vorher angeordneten und vorher ausgerichteten Artikel, während sie in Richtung der und auf die Auflagebereiche (5) befördert werden, der Übergang von einem Förderer zu einem anderen oder zu einem Auflagebereich (5) auf im Wesentlicher vertikaler Ebene erfolgt.

10. Verfahren nach einem der vorhergehenden Ansprüche, wobei ein Großteil der Wagen des Sortierungssystems ein Wagen vom Quergurttyp ist.

11. Verfahren nach Anspruch 10, wobei der Wagen vom Quergurttyp zumindest zwei Quergurte umfasst.

12. Verfahren nach einem der Ansprüche 1-9, wobei ein Großteil der Wagen vom Zylinderrollentyp ist und dazu angepasst ist, Artikel in einer oder mehreren vorbestimmten Richtungen zum Laden und Entladen von Artikeln zu bewegen.

13. Verfahren nach einem der Ansprüche 1-9, wobei ein Großteil der Wagen des Sortierungssystems ein Wagen von einem Kippschalentyp (21) ist.

14. Verfahren nach Anspruch 13, wobei ein Großteil der Wagen des Sortierungssystems ein Wagen von einem Kippschalentyp (21) ist, wobei zumindest ein Artikel auf einer Tragevorrichtung angeordnet ist, wobei die Tragevorrichtung auf der Kippschale anzuordnen ist.

15. Verfahren nach einem der Ansprüche 1-9, wobei ein Großteil der Wagen vom angetriebenen sphärischen Kugeltyp (34) ist und dazu angepasst ist, Artikel zum Laden und Entladen von Artikeln zu bewegen.

16. Verfahren nach einem der Ansprüche 1-9, wobei ein Großteil der Wagen des Sortierungssystems von einem Typ ist, bei dem der Auflagebereich (5) eine feste Oberfläche ist, und wobei Artikel mit integrierten oder nicht integrierten Mitteln, ausgewählt aus der Gruppe umfassend mechanische Drück- und Ziehvorrichtungen, pneumatische Drück- und Ziehvorrichtungen (30), elektrische Drück- und Ziehvorrichtungen, eine beliebige Art von Stellgliedern, sowie ein-undausschaltbare Führungsmittel, entladen werden.

## Revendications

1. Méthode d'utilisation d'un système de tri (1) pour la réception d'articles à un ou plusieurs sites de chargement et le déchargement d'articles à un ou plusieurs sites de déchargement, le système de tri (1) comprenant une pluralité de chariots, lesdits chariots possédant au moins une zone de support (5), pouvant être actionnée pour charger et décharger des articles, ou des dispositifs à bord ou non à bord pouvant être utilisés pour donner lieu au chargement et au déchargement d'articles, et où le chargement et le déchargement d'articles peut être effectué tant à tribord qu'à bâbord d'une direction de transport (7) des chariots, la méthode comprenant
- l'agencement préalable d'articles à trier, et l'orientation préalable des articles, de sorte que les articles puissent être agencés et orientés de façon à tenir dans une ou plusieurs zones de support (5),
- l'acheminement des articles agencés et orientés préalablement en aval, vers les chariots du système de tri,
- avant le chargement des articles sur les chariots, la réception des articles agencés et orientés préalablement à un partiteur (3) en fonction de leur taille :
- deux ou plusieurs articles (10) étant plus petits qu'une zone de support (5), et tenant sur au moins une partie de la taille d'une zone de support (5), et
- des articles de taille moyenne (11) présentant une taille, telle que seul un article puisse être agencé pour tenir dans la taille d'une zone de support (5), et
- un ou plusieurs articles de grande taille (12) présentant une taille, telle qu'un article est plus grand que la taille d'une zone de support individuelle (5), et est adapté pour tenir dans au moins deux zones de support consécutives (5),
la méthode étant **caractérisée en ce qu'**elle comprend :
- après la réception des articles agencés et orientés préalablement au partiteur (3), le détournement des articles à un angle latéral à un transporteur par induction (4), tout en maintenant l'agencement et l'orientation préalables des articles au fur et à mesure qu'ils sont reçus par le partiteur (3),
- et tout en maintenant l'agencement et l'orientation préalables des articles, le chargement des articles avec le transporteur par induction (4) sur la ou plusieurs zones de support de chariot (5), dans lesquelles doivent être reçus et être chargés un ou plusieurs des articles prédéterminés s'approchant, et, selon la taille de l'article,
a. l'induction de deux ou plusieurs articles de petite taille agencés et orientés préalablement (10) jusqu'à ce que lesdits deux ou plusieurs articles de petite taille (10) soient reçus par une zone de support de chariot (5), et
b. l'induction d'un article de taille moyenne (11) agencé et orienté préalablement jusqu'à ce que ledit article de taille moyenne soit reçu par une zone de support de chariot (5), et
c. l'induction d'un ou plusieurs articles de grande taille (12) agencés et orientés préalablement jusqu'à ce que lesdits articles de grande taille (12) soient reçus par au moins deux zones de support de chariots (5) consécutives,
- l'agencement préalable de deux ou plusieurs articles de petite taille (10) devant être triés, et l'orientation préalable des articles de sorte que les deux ou plusieurs articles de petite taille (10) soient agencés pour tenir dans une zone de support (5), comprenant le fait que préalablement au transfert des articles au partiteur (3), les articles de petite taille (10) sont orientés de telle façon que lesdits articles de petite taille (10) soient également alignés conjointement avec un agencement et une orientation correspondant à un axe longitudinal (17) de la zone de support (5), prédéterminé pour recevoir lesdits articles de petite taille (10).

2. Méthode selon la revendication 1, l'agencement préalable d'articles à trier, et l'orientation préalable des articles, de sorte que les articles soient agencés pour tenir dans une ou plusieurs zones de support (5), comprenant le fait que préalablement au transfert des articles au partiteur (3), deux ou plusieurs articles de petite taille (10) sont agencés et orientés de telle façon qu'une longueur et une largeur totales, dans un plan horizontal, desdits deux ou plusieurs articles de petite taille (10) tiennent dans une longueur et une largeur d'une zone de support (5).

3. Méthode selon la revendication 1, l'agencement préalable d'articles de taille moyenne (11) et de grand taille (12), ainsi que l'orientation préalable des articles, afin que les articles soient agencés pour tenir dans au moins une zone de support (5), comprenant le fait que préalablement au transfert des articles au partiteur (3), des articles de taille moyenne (11) et de grand taille (12) sont agencés et orientés de sorte qu'une longueur et une largeur totales, dans un plan horizontal, d'articles de taille moyenne (11) et de grand taille (12) tiennent dans une longueur et une largeur d'au moins une zone de support (5).

4. Méthode selon la revendication 1 ou 3, l'agencement préalable d'articles de taille moyenne (11) et de grand taille (12) devant être triés, ainsi que l'orientation préalable des articles, afin que les articles de taille moyenne et de grand taille soient agencés pour tenir dans au moins une zone de support (5), comprenant le fait que préalablement au transfert des articles au partiteur (3), lesdits articles taille moyenne (11) et de grand taille (12) sont orientés de sorte que lesdits articles taille moyenne et de grand taille soient également alignés conjointement avec une orientation offrant une distance maximale de tous les côtés de l'au moins une zone de support (5), prédéterminée pour recevoir lesdits articles taille moyenne et de grand taille.

5. Méthode selon une quelconque des revendications précédentes, au moins un transporteur par induction (4) étant situé dans une position adjacente au partiteur (3), le transporteur par induction recevant des articles agencés et orientés préalablement, et transportant les articles aux zones de support (5) à un angle latéral et sur les zones de support (5) correspondant à un angle latéral auquel ils sont reçus depuis le partiteur (3).

6. Méthode selon une quelconque des revendications 1 à 5, le transport des articles à l'aide d'un transporteur par induction (4) s'effectuant avec une accélération et une vitesse prédéterminées, et à un angle latéral et sur les zones de support (5), l'accélération et la vitesse prédéterminées du transporteur par induction étant adaptées à la vitesse des zones de support (5), afin que les articles transportés soient reçus par des zones de support prédéterminées.

7. Méthode selon une quelconque des revendications précédentes, les articles détournés étant détournés à un angle latéral pour atteindre les zones de support (5), ledit angle latéral étant différent et inférieur à un angle perpendiculaire à une direction de transport (7) de chariots de support, qui doivent recevoir un ou plusieurs articles prédéterminés s'approchant depuis le partiteur (3).

8. Méthode selon une quelconque des revendications précédentes, l'agencement préalable d'articles à trier, ainsi que l'orientation préalable des articles, de telle façon que les articles soient agencés pour tenir dans une ou plusieurs zones de support (5), comprennent le fait qu'une distance entre les articles est adaptée afin qu'une ou plusieurs zones de support (5) prédéterminées puissent recevoir un ou plusieurs articles prédéterminés.

9. Méthode selon une quelconque des revendications précédentes, les articles agencés et orientés préalablement, pendant leur transport vers et sur les zones de support (5), et passant d'un transporteur à un autre, ou sur une zone de support (5), le sont substantiellement à un même niveau vertical.

10. Méthode selon une quelconque des revendications précédentes, une majorité des chariots du système de tri étant des chariots du type à bande transversale.

11. Méthode selon la revendication 10, le chariot du type à bande transversale comprenant au moins deux bandes transversales.

12. Méthode selon une quelconque des revendications 1 à 9, une majorité des chariots étant du type à rouleau cylindrique, adaptés pour déplacer des articles dans un ou plusieurs directions prédéterminées pour le chargement et le déchargement d'articles.

13. Méthode selon une quelconque des revendications 1 à 9, une majorité des chariots du système de tri étant des chariots du type à plateau basculant (21).

14. Méthode selon la revendication 13, une majorité des chariots du système de tri étant des chariots du type à plateau basculant (21), au moins un article étant agencé sur un bac, ledit bac étant agencé sur le plateau basculant.

15. Méthode selon une quelconque des revendications 1 à 9, une majorité des chariots étant du type entraîné à boule sphérique (34) adapté pour déplacer des articles pour le chargement et le déchargement d'articles.

16. Méthode selon une quelconque des revendications 1 à 9, une majorité des chariots du système de tri étant d'un type où la surface de support (5) est une surface fixe, et où les articles sont déchargés avec des dispositifs à bord et non à bord sélectionnés dans un groupe comprenant des dispositifs de poussée et de traction mécaniques, des dispositifs de poussée et de traction pneumatiques (30), des dispositifs de poussée et de traction électriques, tout type d'actionneur, ainsi que des dispositifs de guidage à fonctionnement en marche/arrêt.
